# EUROPEAN PATENT APPLICATION

(11) **EP 2 463 170 A1**
(43) Date of publication of application: **13.06.2012**
(21) Application number: 10194108.6
(22) Date of filing: 08.12.2010
(51) Int. Cl.: B60W 20/00, B60K 6/48, B60K 6/365, B60W 10/06, B60W 10/08

(54) **Gear arrangement**

(71) Applicant: Saab Automobile AB, 461 80 Trollhättan (SE)
(72) Inventor: Lord, John, 424 72, Olofstorp (SE); Björk, Per- Gunnar, 461 53, Trollhättan (SE); Mohlin, Mikael, 442 32, Kungälv (SE); Hilmersson, Mats, 431 69, Mölndal (SE)
(74) Representative: Haag, Malina Anna

(57) **Abstract**

There is provided a gear arrangement (100) for a hybrid electric vehicle, which is connectable to an electric machine (102) and an engine (101). The gear set (100) comprises a first input gear set (180), a second input gear set (188) and a first output gear set (108), wherein said gear sets (180,188,108) are arranged such that a first and a second gear ratio act only on said engine (101), a third gear ratio act only on said electric motor (102) and a fourth and a fifth gear ratio act simultaneously on both said engine (101) and said electric motor (102). Further, the same mechanical path is used for providing mechanical motion to the transmission system by said engine (101) and electric machine (102), as is used for receiving mechanical motion at said electric machine (102) for charging the energy storage device (123).

## Description

### Technical field

The present invention generally relates to the field of transmission devices for hybrid electric vehicles. In particular, it relates to a gear arrangement for an electric hybrid vehicle comprising an engine and an electric machine.

### Background of the invention

Combining electric motors (EM) and internal combustion engines (ICE) in hybrid electric vehicles for reducing fuel consumption and CO₂ emissions is starting to become widespread. When designing such vehicles there are a number of requirements that have to be met. For example, consumers' demands on the drivability and performance of the vehicle, governmental regulations controlling the emissions from the different power sources, cost constraints and not least a vehicle design that it is appealing to the intended market, at the same time as the vehicle body limits the space available for arranging the propelling and transmission systems.

The GETRAG Corporate Group has presented a hybrid electric vehicle transmission directly connectable an electric motor for propelling the vehicle by converting electric energy to mechanical motion, which motor may be powered by a battery pack. Moreover, the transmission system is also directly connectable to an internal combustion engine (ICE) for propelling the vehicle by converting liquid fuel to mechanical motion. Additionally, the ICE is directly coupled to a generator, which in turn is electrically connected to the battery pack and the power electronics for the propulsion motor, such that the batteries may be charged by the ICE and the propulsion motor can be provided with energy from the generator directly.

Hence, there is provided a vehicle which at low speeds or short ranges may be propelled by the electric motor. At higher speeds, here speeds over 80 km/h, the ICE may be used to increase the speed and/or the range and/or the efficiency of the vehicle, as well as charging the batteries independent of whether the electric motor is used or not. Due to the selected gear configuration, the ICE is not adapted to propel the vehicle at lower speeds.

In order to provide an even more versatile way of driving, there is a need for being able to use the ICE also at lower speeds.

### Summary of the invention

In view of the above, an objective of the invention is to provide a gear arrangement for a hybrid electric vehicle, which gear arrangement enables the use of the ICE also at lower speeds.

Available alternatives are limited by the strong general opinion within the field of hybrid electric vehicles, stating that there must be ways of charging the batteries at all times, i.e. also when the electric motor is propelling the vehicle. Otherwise the driver runs the risk of driving a vehicle, which suddenly runs out of power, with no ways of being able to move the vehicle except by towing it or charging the batteries by plugging it to e.g. wall electricity.

According to a first aspect of the invention there is provided a gear arrangement for a hybrid electric vehicle comprising:
- a first input gear set having:
   - a first input member arranged to receive a first input torque from an engine;
   - a first and a second resulting gear ratio;
   - a first output member arranged to provide a first output torque equal to said first input torque being acted on by said first or second resulting gear ratio;
- a second input gear set having:
   - a second input member arranged to receive a second input torque from an electric machine;
   - a third resulting gear ratio;
   - a second output member arranged to provide a second output torque equal to said second input torque being acted on by said third resulting gear ratio;
- a first output gear set having:
   - a third input member arranged to receive a third input torque;
   - a fourth and a fifth resulting gear ratio;
   - a third output member arranged to provide a third output torque equal to said third input torque being acted on by said fourth or fifth resulting gear ratio;
wherein said third input member is arranged to receive both said first output torque and said second output torque, and
wherein said second input member is operable to receive at least a portion of said first input torque via said first output member.

In relation to this invention the term electric machine means a device capable of transforming electric energy to mechanical motion in e.g. a powering mode of operation, and to transform mechanical motion to electric energy in e.g. a charging mode of operation. Preferably, said transformation device is a motor/generator.

Further, said first input gear set, second input gear set and first output gear set are coupled to each other such that the same mechanical path may be used by said engine and said electric machine for providing mechanical motion to the transmission system, as is used for providing mechanical motion to said electric machine from said engine and/or said transmission system, which motion is converted by said electric machine to electric energy for storage in said energy storage device.

The inventors have realized that sufficient energy may be generated when using this gear arrangement, such that a separate charging path allowing for a charge of the batteries at all times is not necessary. The energy may be obtained e.g. by making use of regenerative breaking, but also by running the engine at it's most energy efficient driving points and/or running the engine at a higher power level than needed for the current road load and forwarding the thereby excessively generated power to the energy storage device for storing.

Consequently, the inventors have realized an energy, space and cost effective way of charging the energy storage device, making the use of a separate generator for charging the batteries superfluous.

Turning back to the gear system, it is arranged such that said fourth and fifth resulting gear ratios acts simultaneously on both said engine and said electric machine, while said second resulting gear ratio acts only on said electric machine, and said first and second resulting gear ratio act only on said engine. In other words, there are ten different propelling modes:
a first propelling mode, wherein said engine is turned off or disconnected, and said third and fourth gear ratio acts on said electric machine, which is propelling the vehicle;
a second propelling mode, wherein said engine is turned off or disconnected, and said third and fifth gear ratio acts on said electric machine, which is propelling the vehicle;
a third propelling mode, wherein the first and fourth resulting gear ratio act on said engine, said second and fourth gear ratio act on said electric machine and both said engine and said electric machine are engaged in propelling the vehicle;
a fourth propelling mode, wherein the second and fourth resulting gear ratio act on said engine, said second and fourth gear ratio act on said electric machine and both said engine and said electric machine are engaged in propelling the vehicle;
a fifth propelling mode, wherein the first and fifth resulting gear ratio act on said engine, said second and fifth gear ratio act on said electric machine and both said engine and said electric machine are engaged in propelling the vehicle;
a sixth propelling mode, wherein the second and fifth resulting gear ratio act on said engine, said second and fifth gear ratio act on said electric machine and both said engine and said electric machine are engaged in propelling the vehicle;
a seventh propelling mode, wherein said electric machine is turned off or disconnected, and said first and fourth gear ratio acts on said engine, which is propelling the vehicle;
a eighth propelling mode, wherein said electric machine is turned off or disconnected, and said second and fourth gear ratio acts on said engine, which is propelling the vehicle;
an ninth propelling mode, wherein said electric machine is turned off or disconnected, and said second and fourth gear ratio acts on said engine, which is propelling the vehicle;
a tenth propelling mode, wherein said electric machine is turned off or disconnected, and said second and fifth gear ratio acts on said engine, which is propelling the vehicle.

An advantage related to the above arrangement is that two gears are acting on both the engine and the electric machine, and at least a further two gears are acting only on the engine. Hence, the most energy efficient working points of the engine may now be spread over a greater speed range, thus improving the drivability and efficiency of the engine and electric machine. By providing at least 4 gears to the engine, a sufficient drivability is provided to allow a pure engine mode of driving, useable e.g. if the vehicle is started after having been parked for a long time in cold weather where batteries can not provide full power, or if driving under tough conditions, such as extremely hilly roads, where the electric machine acting as a generator may not be able to give sufficient power over time. For example, the engine may be comfortably used at speeds ranging e.g. from 0-250 km/h or from 0-200 km/h or speeds above 10 km/h.

According to a second aspect of the invention, there is provided a hybrid electric vehicle comprising:
- a gear arrangement as described in relation to said first aspect;
- an engine operably connected to provide a first input torque to said first input member;
- an electric machine operably connected to provide a second input torque to said second input member;
- a final drive operably connected to receive a resulting output torque from said third output member.

The above described gear arrangement allows for a more cost effective production of a hybrid electric vehicle, as the same gear arrangement is used for propelling the vehicle, and for transmitting mechanical energy from said engine to said electric machine. Additionally, the electric machine, which is used for converting electric energy from the energy storage device to mechanical motion, may also be used for converting mechanical motion to electric energy to be received and stored in the energy storage. Consequently, the generator which is directly connected to the engine and its electric connection to the energy storage device in prior art systems may be dispensed with.

According to a third aspect of the invention, there is provided a method of controlling a gear arrangement arranged as described in relation to said first aspect. The method comprises the following steps, which may be performed in arbitrary order:
- providing an electric driving mode wherein only said second input member provides a torque to said third output member via said third input member;
- providing a hybrid driving mode wherein both said first and second input members provide a torque to said third output member via said third input member;
- providing a driving and charging mode wherein
a first torque, comprising a first and a second torque portions, is provided to said first output member from said first input member; said first torque portion is provided to said third output member via said first output member; and
said second torque portion is provided to said second input member via said first output member.

Embodiments of the above stated aspects are discussed in more detail below.

Advantageously said first output gear set is a planetary gear set, as this enables a space efficient way of providing two gears and enables to change gears without any disruption of momentum. According to one embodiment said planetary gear set comprises a first, second and third node. According to one example said third input member is coupled to said first node, said third output member is coupled to said second node. Moreover said first node preferably is a sun gear, said second node preferably is a planetary carrier and said third node is preferably a ring gear.

According to one embodiment said first input member further comprises:
- a first input shaft;
- a first input gear wheel and a second input gear wheel which are rotatable by said first input shaft;
wherein said first and second input gear wheels are connected or connectable to said first output member, either simultaneously or independently.

Moreover, said first output member may further comprise:
- a first output shaft;
- a first output gear wheel and a second output gear wheel both rotatable by said first output shaft;
wherein
- said first input gear wheel is arranged to engage with said first output gear wheel and preferably thereby providing said first resulting gear ratio; and
- said second input gear wheel is arranged to engage with said second output gear wheel and preferably thereby providing said second resulting gear ratio.

Alternatively or additionally said second input member may comprise:
- a second input shaft;
- a third input gear wheel rotatable by said second input shaft; wherein said third input gear wheel is connected or connectable to said second output member.

Further said third input gear wheel may be arranged to engage with said first output gear wheel and preferably thereby providing said third resulting gear ratio. Alternatively, said first output shaft further comprises a third output gear wheel, and said third input gear wheel may be arranged to engage with said third output gear wheel and thereby providing said third resulting gear ratio. This is also described in more detail in relation to the description of the drawings below.

Advantageously, said second output member and said first output member is one and the same. In more detail, said first output shaft and said second output shaft may be one and the same. Further said first output member and said third input member may be one and the same. Moreover, said third input member may comprise a third input shaft, preferably said third input shaft and said first output shaft are one and the same. This is advantageous as it offers a space efficient way of providing greater working ranges to the engine/electric motor.

According to one embodiment, said first resulting gear ratio is within a range of 4.1:1 to 2.9:1; and/or
said second resulting gear ratio is within a range of 2.6:1 to 1.7:1; and/or
said third resulting gear ratio is within a range of 1.4:1 to 1:1; and/or
said fourth resulting gear ratio is within a range of 0.9:1 to 0.6, and/or
said fifth resulting gear ratio is equal to 1:1.

The planetary gear set may be arranged to provide a gear ratio equal to 1:1 for example by locking the sun gear to the planet carrier, locking the planet carrier to the ring gear, or locking the rotation of the of the planetary gear relative to the carrier.

The above gear ratio distribution is advantageous at it enables favorable points of operation for the engine, which in turn enables it to propel the vehicle in an energy efficient way over a vast speed range.

Turning now to the hybrid electric vehicle described in relation to said second aspect of the invention, it may comprise:
- an energy storage device (123) electrically connected to said electric machine (102) and arranged to receive and store electric energy only from said electric machine.

In relation to this invention the term maximum peak power of a propelling machine is the maximum level of energy output from that machine, during an observation period of 20 seconds. Advantageously, the ratio between the maximum peak power of the electric machine and the maximum power of the engine is at least 1.1, or at least 1.2, or at least 1.5, or at least 1.7 or at least 2, or at least 3. This allows the vehicle to be propelled by the electric machine at a vast speed range. Additionally, it allows the engine to be started by the electric machine.

Below is described an advantageous method, which enables a slip start of the engine powered by the electric motor, and may be performed while the same electric machine is propelling the vehicle. Hence, the method described in relation to said third aspect of the invention may further comprise the steps of providing an engine starting and driving mode wherein
- a second torque, comprising a third and a fourth torque portions, is provided to said first output member from said second input member;
- said third torque portion is provided to said third output member via said first output member; and
- said fourth torque portion is provided to said first input member via said first output member.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a schematic drawing illustrating a hybrid electric vehicle transmission according to a prior-art solution;
Fig. 2 schematically illustrates a gear arrangement for a hybrid electric vehicle according to the invention;
Fig. 3. schematically illustrates an alternative gear arrangement for a hybrid electric vehicle according to the invention.

### Detailed description of embodiments

The present invention relates to vehicles in general, but more specifically to passenger cars of a size arranged for between two to nine passengers, or two to five passengers, including a driver.

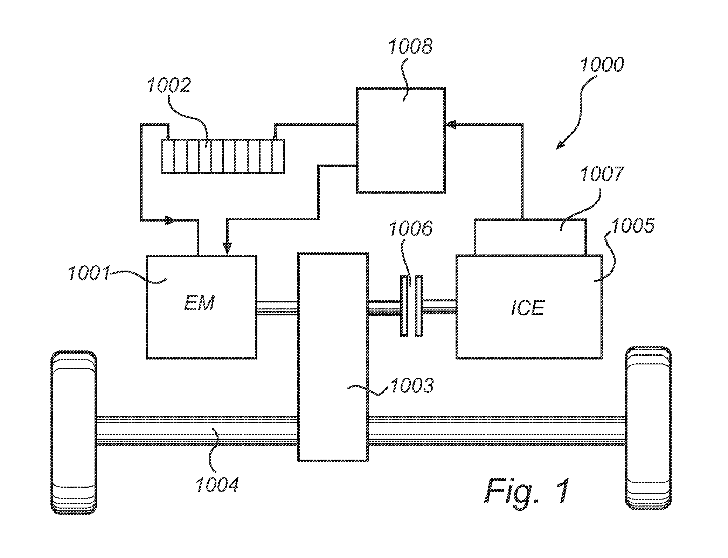

Figure 1 is a schematic drawing illustrating a prior-art solution for a hybrid electric vehicle transmission connectable to an electric motor and an internal combustion engine (ICE) for propelling the vehicle. In a mounted condition the vehicle comprises a battery pack 1002 electrically connected to an electric propulsion motor 1001, which in turn is directly connected to the vehicle transmission 1003 for propelling the vehicle by converting electric energy to mechanical motion. Moreover, there is provided an internal combustion engine 1005 which is also directly connected, by means of a clutch 1006, to the vehicle transmission 1003 for propelling the vehicle by converting liquid fuel to mechanical motion. Additionally, the ICE 1005 is directly coupled to a generator 1007, which in turn is electrically connected to the battery pack 1002 and the power electronics 1008 for the propulsion motor, such that said battery pack may be charged by the ICE, and the propulsion motor 1001 can be provided with energy from the generator 1007 directly. Hence, the vehicle may at low speeds or short ranges be propelled by the electric motor. At higher speeds, here speeds over 80 km/h, the ICE may be used to increase the speed and/or the range of the vehicle, as well as charging the batteries, independent of whether the electric motor is used or not.

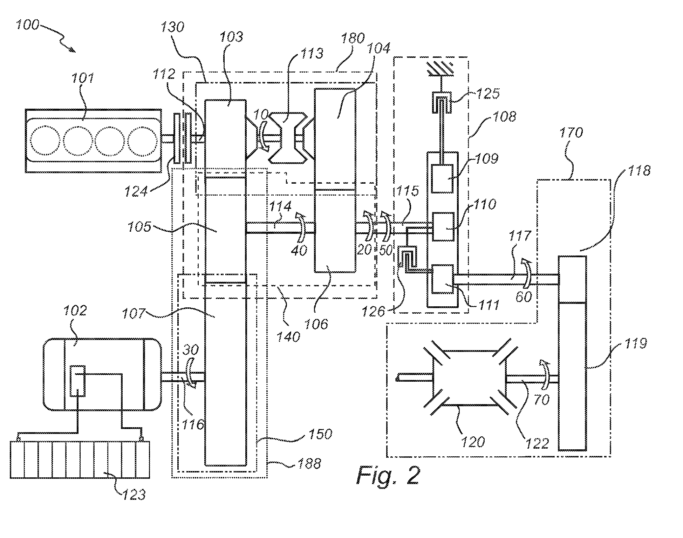

Figure 2 schematically illustrates a gear arrangement for a hybrid electric vehicle such as a passenger car, which comprises a first input gear set 180, a second input gear set 188 and a first output gear set 108, wherein the first input gear set 180 is connected in series with said first output gear set 108. In more detail the first input gear set comprises a first input member 130, which is arranged to receive a first input torque 10 from an engine 101, such as an internal combustion engine. The first input gear set is further arranged to transmit said first torque to a first output member 140 of said first input gear set under a selectable first or second resulting gear ratio. In other words, said first output member 140 is arranged to receive a first output torque 20, which is equal to said first input torque being acted on by said first or second resulting gear ratio. In yet more detail, said first input member 130 comprises a first input shaft 112, as well as first input gear wheel 103 and a second input gear wheel 104 arranged on said input shaft. A moveable locking device 113 or a shift sleeve is provided on said shaft 112, for selectively engaging with said first and second input gear wheels 103, 104, and thereby selectively providing a locking engagement between said first gear wheel and said first shaft 112, and between said second gear wheel and said first shaft 112, respectively. The locking engagement between a gear wheel and a shaft translates a rotating motion of the gear wheel to the shaft.

Moreover, said first output member 140 comprises a first output shaft 114, as well as first output gear wheel 105 and a second output gear wheel 106 arranged on said first output shaft 114. The first output gear wheel 105 meshes or engages with said first input gear wheel 103, and the second output gear wheel 106 meshes or engages with said second input gear wheel 104, respectively. Consequently, a first torque 10 received by said first input shaft 112 may be transmitted to said first output shaft either via said first input gear wheel 103 and said first output gear wheel 105, during which it is acted on by said first resulting gear ratio, or via said second input gear wheel 104 and said second output gear wheel 106, during which it is acted on by said second resulting gear ratio.

There are alternative ways of providing said first and second gear ratios, e.g. by use of a planetary gear set or by use of a continuously variable transmission (CVT).

Turning to the second input gear set, it comprises a second input member 150, which is arranged to receive a second input torque 30 from an electric machine 102, such as an electric motor/generator. The electric motor/generator is electrically connected to an energy storage device 123 or battery, such that electric energy stored in said battery may be provided to said motor/generator and converted into a torque 30 provided to said second input member. The second input gear set is further arranged to transmit said second torque 30 to a second output member 140 of said second input gear set under a third resulting gear ratio. In other words, said second output member 140 is arranged to receive a second output torque 40 equal to said second input torque being acted on by said third resulting gear ratio. In yet more detail, said second input member 150 comprises a second input shaft 116, as well as third input gear wheel 107 arranged on said second input shaft. Moreover, said second output member 140 comprises a second output shaft 114, as well as third gear output wheel 105 arranged on said second output shaft. The third output gear wheel 105 meshes or engages with said third input gear wheel 107. Consequently, a second input torque 30 received by said second input shaft 116 may be transmitted to said second output shaft via said second input gear wheel 107 and said second output gear wheel 105 during which it is acted on by said third resulting gear ratio.

Further, both first output shaft and said second output shaft 114 is connected to a third input shaft 115 of the first output gear set 108. According to one example, and as illustrated in Figure 2, said first and second output shafts and said third input shaft are one and the same. Moreover, said first output shaft and said second output shaft are also one and the same; as well as said first output gear wheel and said second output gear wheel, which are also one and the same.

Turning to the first output gear set 108, it comprises a third input member 115, which is arranged to receive a third input torque 50. The first output gear set 108 is further arranged to transmit said third input torque 50 to a third output member 170 of said first output gear set 108 under a fourth and fifth resulting gear ratio. In other words, said third output member 170 is arranged to receive a third output torque 60 equal to said third input torque 50 being acted on by said fourth or fifth resulting gear ratio. In yet more detail, said first output gear set 108 may be a planetary gear set, comprising a first, second and third node 109, 110, 111, wherein said first node 109 may be a ring gear, said second node 110 may be a sun gear, and said third node 111 a planetary carrier. Said fourth gear ratio may be provided by locking said ring gear to a stationary member by means of a first clutch 125. Said fourth gear ratio may be provided by locking said sun gear and said planetary carrier to each other by means of a second clutch 126, resulting in a fifth gear ratio equal to 1:1.

In more detail said third output member may have a final gear set, comprising a final input gear wheel 118 arranged on a fourth input shaft 117 being the same as said third output shaft, and a final output gear wheel 119 arranged on a fourth output shaft, wherein said final input gear wheel and said final output gear wheel engages with each other so as to transmit a rotating motion from said fourth input shaft to said fourth output shaft. Said fourth output shaft is further connected to a differential 120.

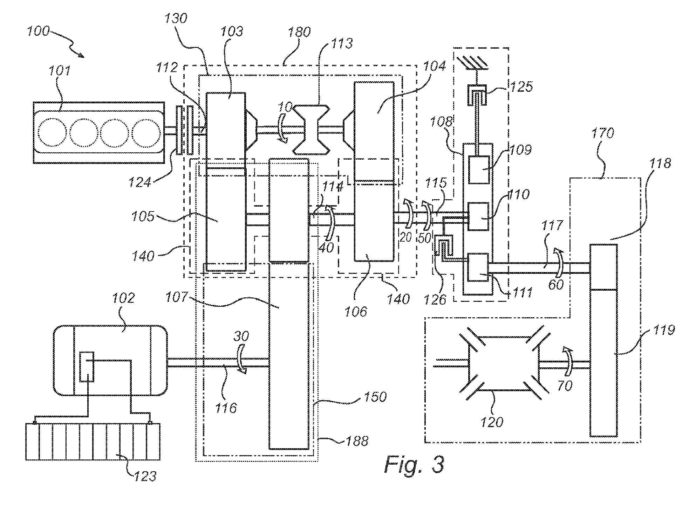

An alternative embodiment is schematically illustrated in Figure 3. The embodiment illustrated in Figure 3 is identical to the one described in relation to Figure 2, except that said third output gear wheel 208 and said first output gear wheel 105 are not one and the same. Said third output gear wheel 208 is instead a separate gear wheel, arranged between said first output gear wheel 105 and said second output gear wheel 106 on said first output shat 114. Said first output shaft being the same as said second output shaft. Consequently, said third input gear wheel does not engage with said first output gear wheel 105, but with said third output gear wheel 208.

The following description of e.g. different driving modes, all descriptions relate both to the gear arrangement described in relation to Figure 2 as well as the gear arrangement described in relation to Figure 3. In an pure electric driving mode of operation a second input torque 30 provided to said second input member may be transmitted to said third output member 170, via said second input gear wheel and said second output gear wheel 105 or 208, wherein said second input gear set acts on said second input torque by a resulting third gear ratio, thus providing a second output torque 40. Additionally, said first output gear set may be set to act on said second output torque by a fourth gear resulting ratio or a fifth resulting gear ratio, thus providing a third output torque 60 to said third output member 117. Consequently, there is provided two effective gears to the electric motor: one wherein said third and fourth resulting gears act on said second torque; and another wherein said third and fifth resulting gears act on said second torque.

In an pure engine driving mode of operation or a pure ICE driving mode of operation, a first input torque 10 provided to said first input member may be transmitted to said output member 170, via said first input gear wheel 103 and said first output gear wheel 105, wherein said first input gear set 180 acts on said first input torque 10 by a resulting first gear ratio, thus providing a first output torque 20. Alternatively, a first input torque 10 provided to said first input member 130 may be transmitted to said first output member 140, via said second input gear wheel 104 and said second output gear wheel 106, wherein said first input gear set acts on said first input torque 10 by a resulting second gear ratio. Additionally, said first output gear set 108 may be set to act on said first output torque by a resulting fourth gear ratio or a resulting fifth gear ratio, thus providing a third output torque 60 to said third output member 170. In this document the terms pure engine driving mode of operation and pure ICE driving mode of operation are used interchangeably.

Consequently, there are provided four gears to the ICE: one wherein said first and fourth resulting gear ratios act on said first input torque; one wherein said second and fourth resulting gear ratios act on said first input torque; one wherein said first and fifth resulting gear ratios act on said first input torque and one wherein said second and fifth resulting gear ratios act on said first torque.

In a hybrid driving mode of operation, a first input torque 10 provided to said first input member 130 and a second input torque 30 provided to said second input member 150 may simultaneously be applied to said third output member 170 in a similar way as described in relation to said pure electric driving mode of operation and said pure engine driving mode of operation above. In this mode the same resulting gear, i.e. said fourth or said fifth resulting gear, acts on both said electric machine and said engine.

In an engine slip starting mode of operation, electric energy is converted by said electric machine 102 to a second input torque 20 provided to said second input member. Said second torque is transferred to said first input member 130 and said first input shaft, via said second output gear wheel 105; 208, and said first or second input gear wheels 103, 104. Thereafter, the engine is started by slip clutch action, using a clutch 112 connecting said engine to said first input member 112.

In a charging mode of operation, the motor/generator acts as a generator. A first input torque 10 is provided to said first input member 130 and is transferred to said second input member 150 via said first input and output gear wheels 103, 105, or said second input and output gear wheels 104, 106; and thereafter via said third output and input gear wheels. Said electric machine converts said torque or power received by said second input member to electric energy which is stored in said battery.

In a regenerative braking mode of operation, the motor/generator acts as a generator. A third torque is provided to said third output member 170 and is transferred to the third input member 115 and thereafter to said second input member 150 via said third output and input gear wheels. Said electric machine converts said torque received by said second input member to electric energy which is stored in said battery.

The charging mode of operation and the regenerative braking mode of operation may be performed simultaneously.

The charging mode of operation may be performed simultaneously with the ICE driving mode of operation or engine driving mode of operation, by e.g. applying a suitable voltage to the electric machine. In other words, said third output member 170 receives a first torque 60 from said engine as described in relation to said pure engine driving mode of operation, simultaneously as the electric machine receives a second torque 30 from said engine as described in relation to said charging mode of operation. In other words, a first input torque 10 from said first input member is simultaneously transmitted to said third output member 170 as a first torque portion 60, and to said second input member as a second torque portion 30.

Based on the above teaching it is clear to the man skilled in the art how additional modes of operation, such as parking and reversing may be obtained.

Although exemplary embodiments of the present invention have been described herein, it should be apparent to those having ordinary skill in the art that a number of changes, modifications or alterations to the invention as described herein may be made. For example, additional gear ratios may be added, e.g by providing an additional set of gear wheels to said first input and output members; the shaft sleeve may be arranged to act on said first and second output gear wheels instead of said input gear wheels, while said first and second gear wheels are fixed to said first input shaft. Thus, the above description of the various embodiments of the present invention and the accompanying drawings are to be regarded as non-limiting examples of the invention and the scope of protection is defined by the appended claims. Any reference signs in the claims should not be construed as limiting the scope.

## Claims

**1.** A gear arrangement (100) for a hybrid electric vehicle comprising:
- a first input gear set having:
- a first input member (130) arranged to receive a first input torque (10) from an engine (101);
- a first and a second resulting gear ratio;
- a first output member (140) arranged to provide a first output torque (20) equal to said first input torque being acted on by said first or second resulting gear ratio;
- a second input gear set having:
- a second input member (150) arranged to receive a second input torque (30) from an electric machine (102);
- a third resulting gear ratio;
- a second output member (140) arranged to provide a second output torque (40) equal to said second input torque being acted on by said third resulting gear ratio;
- a first output gear set (108) having:
- a third input member (115) arranged to receive a third input torque (50);
- a fourth and a fifth resulting gear ratio;
- a third output member (170) arranged to provide a third output torque (60) equal to said third input torque being acted on by said fourth or fifth resulting gear ratio;
wherein said third input member (115) is arranged to receive both said first (20) output torque and said second output torque (40), and
wherein said second input member (150) is operable to receive at least a portion of said first input torque (10) via said first output member (140).

**2.** A gear arrangement according to claim 1, wherein said first output gear set (108) is a planetary gear set.

**3.** A gear arrangement according to claim 2, wherein said planetary gear set comprises a first, second and third node (109, 110, 111), and said third input member is coupled to said first node, said third output member is coupled to said second node and wherein said first node preferably is a sun gear, said second node preferably is a planetary carrier and said third node is preferably a ring gear.

**4.** A gear arrangement according to any one of the preceding claims, wherein said first input member (130) further comprises:
- a first input shaft (112);
- a first input gear wheel (103) and a second input gear wheel (104) which are rotatable by said first input shaft;
wherein said first and second input gear wheels are connected or connectable to said first output member (140).
and/or
wherein said a first input gear wheel and a second input gear wheel each are selectively rotatable by said first input shaft.

**5.** A gear arrangement according to claim 4, wherein
said first output member further comprises:
- a first output shaft (114);
- a first output gear wheel (105) and a second output gear wheel (106) both rotatable by said first output shaft;
wherein
- said first input gear wheel (103) is arranged to engage with said first output gear wheel (105) and preferably thereby providing said first resulting gear ratio; and
- said second input gear wheel (104) is arranged to engage with said second output gear wheel (106) and preferably thereby providing said second resulting gear ratio.

**6.** A gear arrangement according to any one of the preceding claims, wherein said second input member (150) further comprises:
- a second input shaft (116);
- a third input gear wheel (107) rotatable by said second input shaft; wherein said third input gear wheel is connected or connectable to said second output member (140);
and/or
wherein said third input gear wheel (107) is arranged to engage with said first output gear wheel (105) and preferably thereby providing said third resulting gear ratio.

**7.** A gear arrangement according to any one of the preceding claims, wherein
- said first output shaft (140) further comprises a third output gear wheel (208); and
- said third input gear wheel (208) is arranged to engage with said third output gear wheel (207) and preferably thereby providing said third resulting gear ratio.

**8.** A gear arrangement according to any one of the preceding claims, wherein said first output member (140) and said second output member (140) is one and the same;
and/or
wherein said first output member (140) and said third input member (115) is one and the same.

**9.** A gear arrangement according to any one of claims 5 to 8, wherein said third input member (115) comprises a third input shaft (115), and said third input shaft and said first output shaft (114) is one and the same.

**10.** A gear arrangement according to any one of the preceding claims, wherein said first resulting gear ratio is within a range of 4.1:1 to 2.9:1; and/or
wherein said second resulting gear ratio is within a range of 2.6:1 to 1.7:1; and/or
wherein said third resulting gear ratio is within a range of 1.4:1 to 1:1; and/or
wherein said fourth resulting gear ratio is within a range of 0.9:1 to 0.6:
wherein said fifth resulting gear ratio is equal to 1:1.

**11.** A hybrid electric vehicle comprising:
- a gear arrangement according to any one of claims 1 to 10
- an engine (101) operably connected to provide a first input torque to said first input member (130);
- an electric machine (102) operably connected to provide a second input torque to said second input member;
- an energy storage device, electrically connected to said electric machine for providing electric energy to said electric machine and for receiving electric energy from said electric machine;
- a final drive (122) operably connected to receive a resulting output torque from said third output member.

**12.** A hybrid electric vehicle according to claim 11, wherein the maximum power of said electric machine is greater than the maximum power of said engine.

**13.** A hybrid electric vehicle according to claim 11 or 12, further comprising:
- a energy storage device (123) electrically connected to said electric machine (102) and arranged to receive and store electric energy only from said electric machine.

**14.** A method of controlling a gear arrangement according to claim 1, comprising the following steps in arbitrary order:
- providing an electric driving mode wherein only said second input member (150) provides a torque to said third output member via said third input member;
- providing a hybrid driving mode wherein both said first and second input members (130, 150) provide a torque to said third output member via said third input member;
- providing a driving and charging mode wherein
a first torque, comprising a first and a second torque portions, is provided to said first output member (140) from said first input member (130);
said first torque portion is provided to said third output member (170) via said first output member; and
said second torque portion is provided to said second input member (150) via said first output member.

**14.** A method according to claim 12 or 13, further comprising the step of providing an engine starting and driving mode wherein
- a second torque 60, comprising a third and a fourth torque portions, is provided to said first output member (140) from said second input member (150);
- said third torque portion is provided to said third output member (170) via said first output member; and
- said fourth torque portion is provided to said first input member (130) via said first output member.
